# EUROPEAN PATENT APPLICATION

(11) **EP 4 579 484 A1**
(43) Date of publication of application: **02.07.2025**
(21) Application number: 24215572.9
(22) Date of filing: 26.11.2024
(51) Int. Cl.: G06F 16/55

(54) **INTERNET OF THINGS CAMERA-BASED ITEM SEARCH**

(30) Priority: 28.12.2023 US 202318398616
(71) Applicant: Roku, Inc., San Jose, CA 95110 (US)
(72) Inventor: LIN, Yu-Cheng, San Jose, 95110 (US); RAMESH, Sunil, San Jose, 95110 (US); CUTTER, Michael, San Jose, 95110 (US); LINEBACK, Nicholas, San Jose, 95110 (US); LEVITIAN, Karina, San Jose, 95110 (US)
(74) Representative: Mewburn Ellis LLP

(57) **Abstract**

Disclosed herein are system, method and/or computer program product embodiments, and/or combinations and sub-combinations thereof for providing an item search service for a premises comprising a set of Internet of Things (IoT) cameras. An example embodiment operates by receiving, via a user interface of the item search service, first user input regarding an item of interest, wherein the first user input comprises one or more of speech input or text input, accessing a plurality of images of the premises captured by the set of IoT cameras, executing a machine learning model to identify one or more images in the plurality of images that include the item of interest based at least on the first user input, generating an item search result based on the identified one or more images, and providing the item search result via the user interface of the item search service.

## Description

### BACKGROUND

### FIELD

This disclosure is generally directed to an item search service for a premises and, in particular, to an item search service for a premises that is implemented utilizing one or more Internet of Things (IoT) cameras.

### SUMMARY

Provided herein are system, apparatus, article of manufacture, method and/or computer program product embodiments, and/or combinations and sub-combinations thereof, for providing an item search service for a premises comprising a set of IoT cameras. An example embodiment performs operations including receiving, via a user interface of the item search service, first user input regarding an item of interest, wherein the first user input comprises one or more of speech input or text input, accessing a plurality of images of the premises captured by the set of IoT cameras, executing a machine learning model to identify one or more images in the plurality of images that include the item of interest based at least on the first user input, generating an item search result based on the identified one or more images, and providing the item search result via the user interface of the item search service.

In some aspects, the first user input comprises natural language input and the machine learning model comprises a multi-modal machine learning model trained on a set of images and natural language text respectively associated with each image in the set of images.

In some aspects, the operations further comprise receiving, via the user interface of the item search service, second user input that specifies an image of the item of interest and a label assigned to the item of interest by a user, and utilizing the image of the item of interest and the label assigned to the item of interest to train the machine learning model.

In some aspects, the receiving, accessing, executing, generating and providing operations are performed by one or more devices located within the premises.

In some aspects, the operations further comprise selecting the machine learning model from among a plurality of different machine learning models, wherein each machine learning model of the plurality of different machine learning models is trained or fine-tuned for one of a particular premises type or a particular demographic.

In some aspects, the operations further comprise authenticating a user of the item search service and determining that the user is an authorized user of the item search service based on the authenticating, and one or more of the receiving, accessing, executing, generating and providing operations is performed in response to determining that the user is the authorized user of the item search service.

In some aspects, the operations further comprise receiving, via the user interface of the item search service, second user input that specifies an item that should not be searchable and, in response to receiving the second user input, applying a content filter that prevents the item search service from searching for the item that should not be searchable or that prevents the item search service from returning an item search result for the item that should not be searchable.

In some aspects, the operations further comprise determining an identity of a user of the item search service, and executing the machine learning model comprises executing the machine learning model to identify the one or more images in the plurality of images that include the item of interest based at least on the first user input and the identity of the user.

In some aspects, generating the item search result based on the identified one or more images comprises one or more of generating a speech or text description of a location of the item of interest based on the identified one or more images, or generating an image that shows the location of the item of interest based on the identified one or more images.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates a block diagram of a system for providing an item search service for a premises comprising a set of IoT cameras, according to some embodiments.
FIG. 4 illustrates a flow diagram of a method for providing an item search service for a premises comprising a set of IoT cameras, according to some embodiments.
FIG. 5 illustrates a flow diagram of a method for training a machine learning model used to implement an item search service for a premises, according to some embodiments.
FIG. 6 illustrates a flow diagram of a method for providing a secure item search service for a premises, according to some embodiments.
FIG. 7 illustrates a flow diagram of a method for preventing an item search service for a premises from searching for a specified item, according to some embodiments.
FIG. 8 illustrates a flow diagram of a method for providing an item search service for a premises that supports user-specific query interpretation, according to some embodiments.
FIG. 9 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Keeping track of an item within a premises can be challenging, particularly if the item is relatively small and often moved. For example, in a home, essential or important items such as a wallet, a purse, a bag, keys, a smartphone, a laptop, or a remote control may easily be misplaced, requiring the item owner to physically search throughout the home to recover the item. Such physical searching may be inconvenient, time consuming, and stressful.

Some technology exists to help users recover lost or misplaced items. For example, battery-operated Bluetooth tracking devices exist that may be attached to an item and then used to track the item's location. However, some significant shortcomings of Bluetooth tracking devices include but are not limited to: a separate Bluetooth tracking device must be purchased for every item a user may wish to track, which can be expensive; some Bluetooth tracking devices don't allow for battery replacement, meaning that the user must buy a whole new tracking device when the battery dies; for Bluetooth tracking devices that do allow battery replacement, having to periodically replace the battery can be expensive and inconvenient; Bluetooth tracking devices can only be used to track items having a form factor that makes attachment of the tracking device thereto feasible; the means of attachment between the Bluetooth tracking device and the item may fail or be broken; the item will only be locatable if it is within range of another Bluetooth device; a Bluetooth tracking device can be dangerous to children if the tracking device is small enough to be ingested, or if the tracking device uses a button or coin battery and the device case isn't secure; and Bluetooth tracking devices can be misused to target and stalk users and monitor their locations.

As another example of technology that can help users recover lost or misplaced items, some smartphones may be configured to leverage built-in GPS-based and/or WiFi-based tracking technology to help a user locate the smartphone. However, this solution is extremely limited as it only applies to the very narrow class of items that include built-in location tracking technology.

Provided herein are system, apparatus, device, method and/or computer program product embodiments, and/or combinations and sub-combinations thereof, for providing an item search service for a premises comprising a set of IoT cameras that addresses one or more of the foregoing issues associated with conventional solutions for tracking items of interest to a user. Providing the item search service may include (i) receiving, via a user interface of the item search service, first user input regarding an item of interest, wherein the first user input comprises one or more of speech input or text input; (ii) accessing a plurality of images of the premises captured by the set of IoT cameras; (iii) executing a machine learning model to identify one or more images in the plurality of images that include the item of interest based at least on the first user input; (iv) generating an item search result based on the identified one or more images; and (v) providing the item search result via the user interface of the item search service.

As will be discussed herein, the item search service may advantageously utilize various IoT cameras installed in or around a premises to assist a user in locating an item of interest. In some scenarios, the item search service may leverage various IoT cameras that are already installed in a home as part of a home security system or a home automation system and/or various IoT cameras that are integrated within various user devices located throughout a home, although these are only examples.

In some aspects, the item search service may utilize the speech input or text input provided by the user as input for a multi-modal machine learning model that is able to utilize such input to identify one or more images collected by the IoT cameras that include the item of interest. In a scenario in which the machine learning model is trained on a large number of images and associated natural language descriptions, the machine learning model may provide useful results to a natural language query submitted by a user (e.g., "where did I leave my keys?") even though the machine learning model may not have observed the item that the user is looking for during training.

In some aspects, the machine learning model used to provide the item search service may be selected from among a plurality of different machine learning models, wherein each machine learning model of the plurality of different machine learning models is trained or fine-tuned for one of a particular type of premises or a particular user demographic. Such a feature may enable a machine learning model to be selected that will provide the best item tracking performance for a particular premises and/or a particular user.

In some aspects, a user can provide input via the user interface of the item search service that specifies an image of the item of interest and a label assigned to the item of interest by the user. For example, a user may say "these are my keys" while holding up the keys in front of an IoT camera, or may tag the keys within an image captured by the IoT camera and say or type "these are my keys". The specified image of the item of interest and the label assigned to the item of interest can then be used to train (e.g., train, retrain, or fine-tune) the machine learning model so that it will associate the image of the item with the label going forward.

In some aspects, the item search service may infer a label for a particular item based on an association between a user and the particular item. For example, the item search service may label an item as "Bob's smartphone" if the user submitting an image of the smartphone for training purposes is Bob or if the service determines that the user Bob is most often observed holding that particular smartphone. These user-specific item labels can then be used to train (e.g., train, retrain or fine-tune) the machine learning model so that when a particular user (e.g., Bob) says "where did I leave my smartphone", the machine learning model can identify that particular user's smartphone (e.g. Bob's smartphone) in the IoT camera images.

In some aspects, the machine learning model as well as other components of the item search service may be installed and executed on one or more devices within the premises (e.g., the edge) as opposed to on computing devices external to the premises (e.g., the cloud). Such an implementation may serve to protect the privacy and data security of the user, enable the processing demands of the service to be distributed across multiple end user devices, and increase resiliency as, without a cloud dependency, the service may still be capable of operating even when an Internet connection is lost.

In some aspects, the item search service may include an authentication feature that ensures that only authorized users can use the service and/or search for particular items using the service. Such a feature can advantageously prevent misuse of the system by bad actors (e.g., home intruders) as well as generally prevent certain users from locating certain items within the premises using the service (e.g., preventing a child in a home from accessing certain dangerous or prohibited items).

In some aspects, a user may provide input via the user interface of the item search service that specifies an item that should not be searchable by the service and, in response, the service may thereafter apply a content filter that prevents the item search service from searching for the item or that prevents the item search service from providing an item search result about the item. Such a feature can advantageously enable a user of the service to selectively "hide" certain items from the service that the user does not wish to be locatable (e.g., a wall safe, a handgun).

In some aspects, the item search service may generate the item search result in a manner that facilitates easy tracking or recovery of the item of interest by the user. For example, based on the one or more images identified by the machine learning model as including the item of interest, the item search service may generate a speech or text description of a location of the item of interest and/or generate an image that shows the location of the item of interest, and such speech/text description and/or image showing the location of the item of interest may be presented to the user via the user interface of the item search service.

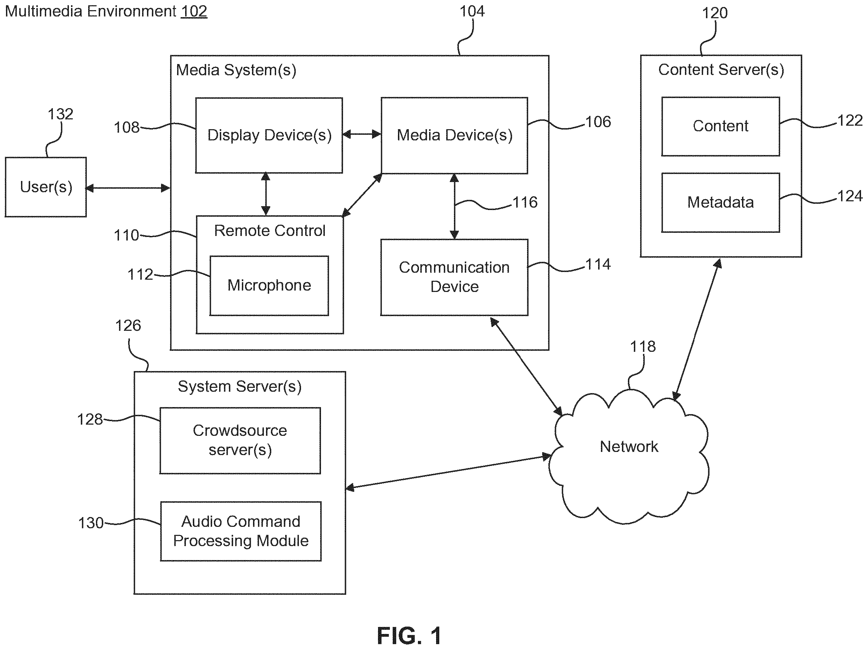

These and various other features and advantages of an IoT camera-based item search service for a premises will be described in detail herein in reference to various embodiments. Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

Multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. Communication device 114 may include, for example, a cable modem or satellite TV transceiver. Media device 106 may communicate with communication device 114 over a link 116, wherein link 116 may include wireless (such as Wi-Fi) and/or wired connections.

In various embodiments, network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. Remote control 110 can be any component, part, apparatus and/or method for controlling media device 106 and/or display device 108, such as a remote control, a tablet, laptop computer, smartphone, wearable, on-screen controls, integrated control buttons, audio controls, or any combination thereof, to name just a few examples. In an embodiment, remote control 110 wirelessly communicates with media device 106 and/or display device 108 using cellular, Bluetooth, infrared, etc., or any combination thereof. Remote control 110 may include a microphone 112, which is further described below.

Multimedia environment 102 may include a plurality of content servers 120 (also called content providers, channels or sources 120). Although only one content server 120 is shown in FIG. 1, in practice multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to content 122. Metadata 124 may also or alternatively include one or more indexes of content 122, such as but not limited to a trick mode index.

Multimedia environment 102 may include one or more system servers 126. System servers 126 may operate to support media devices 106 from the cloud. It is noted that the structural and functional aspects of system servers 126 may wholly or partially exist in the same or different ones of system servers 126.

Media devices 106 may exist in thousands or millions of media systems 104. Accordingly, media devices 106 may lend themselves to crowdsourcing embodiments and, thus, system servers 126 may include one or more crowdsource servers 128.

For example, using information received from media devices 106 in the thousands and millions of media systems 104, crowdsource server(s) 128 may identify similarities and overlaps between closed captioning requests issued by different users 132 watching a particular movie. Based on such information, crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, crowdsource server(s) 128 may operate to cause closed captioning to be automatically turned on and/or off during future streamings of the movie.

System servers 126 may also include an audio command processing module 130. As noted above, remote control 110 may include microphone 112. Microphone 112 may receive audio data from users 132 (as well as other sources, such as the display device 108). In some embodiments, media device 106 may be audio responsive, and the audio data may represent verbal commands from user 132 to control media device 106 as well as other components in media system 104, such as display device 108.

In some embodiments, the audio data received by microphone 112 in remote control 110 is transferred to media device 106, which is then forwarded to audio command processing module 130 in system servers 126. Audio command processing module 130 may operate to process and analyze the received audio data to recognize user 132's verbal command. Audio command processing module 130 may then forward the verbal command back to media device 106 for processing.

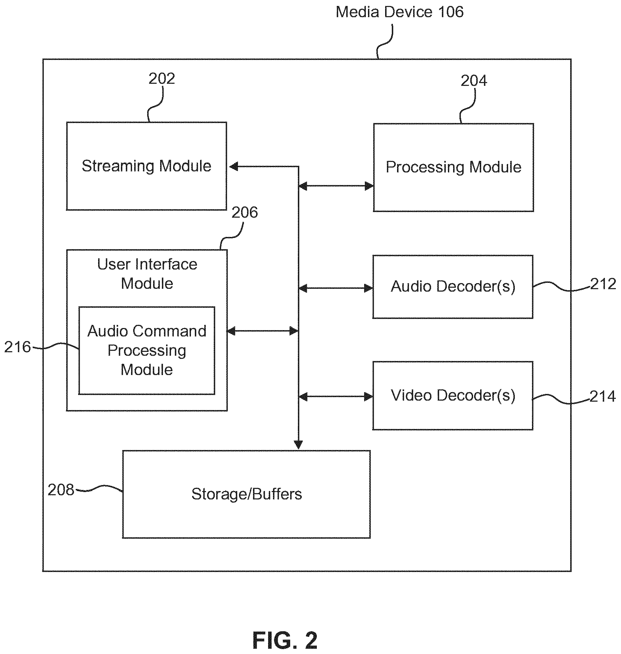

In some embodiments, the audio data may be alternatively or additionally processed and analyzed by an audio command processing module 216 in media device 106 (see FIG. 2). Media device 106 and system servers 126 may then cooperate to pick one of the verbal commands to process (either the verbal command recognized by audio command processing module 130 in system servers 126, or the verbal command recognized by audio command processing module 216 in media device 106).

FIG. 2 illustrates a block diagram of an example media device 106, according to some embodiments. Media device 106 may include a streaming module 202, a processing module 204, storage/buffers 208, and a user interface module 206. As described above, user interface module 206 may include audio command processing module 216.

Media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, user 132 may interact with media device 106 via, for example, remote control 110. For example, user 132 may use remote control 110 to interact with user interface module 206 of media device 106 to select content, such as a movie, TV show, music, book, application, game, etc. Streaming module 202 of media device 106 may request the selected content from content server(s) 120 over network 118. Content server(s) 120 may transmit the requested content to streaming module 202. Media device 106 may transmit the received content to display device 108 for playback to user 132.

In streaming embodiments, streaming module 202 may transmit the content to display device 108 in real time or near real time as it receives such content from content server(s) 120. In non-streaming embodiments, media device 106 may store the content received from content server(s) 120 in storage/buffers 208 for later playback on display device 108.

### IoT Camera-Based Item Search

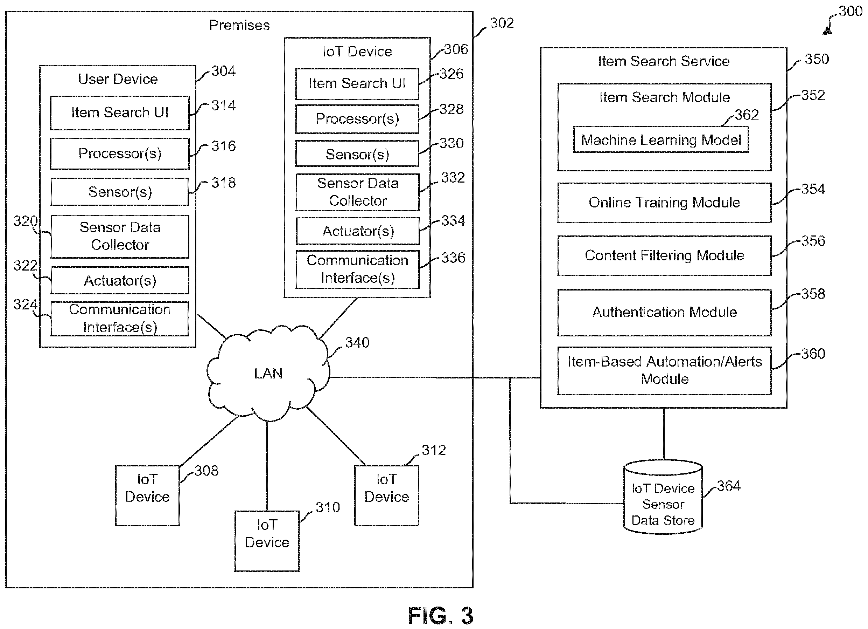

FIG. 3 illustrates a block diagram of a system 300 for providing an item search service for a premises comprising a set of IoT cameras, according to some embodiments. As shown in FIG. 3, system 300 includes a premises 302 and an item search service 350. Each of these aspects of system 300 will now be described.

### Premises 302

As shown in FIG. 3, system 300 includes a premises 302 in which a plurality of IoT devices 306, 308, 310 and 312 are present. Premises 302 may comprise, for example and without limitation, a home, an office, a building, a factory, a warehouse, a bar, a restaurant, a movie theater, a stadium, an auditorium, a car, a bus, a boat, or any other structure, location or space in which IoT devices may be present. Although only four IoT devices are shown as being present in premises 302 for the sake of illustration, it should be understood that premises 302 may include any number of IoT devices, including tens, hundreds or even thousands of IoT devices.

As used herein, the term "IoT device" is intended to broadly encompass any device that is capable of engaging in digital communication with another device. For example, a device that can digitally communicate with another device can comprise an IoT device, as that term is used herein, even if such communication does not occur over the Internet.

Each of IoT devices 306, 308, 310 and 312 may comprise a device such as, for example, a smart phone, a laptop computer, a notebook computer, a tablet computer, a netbook, a desktop computer, a video game console, a set-top box, or an OTT streaming media player. Furthermore, each of IoT devices 306, 308, 310 and 312 may comprise a so-called "smart home" device such as, for example, a smart lightbulb, a smart switch, a smart refrigerator, a smart washing machine, a smart dryer, a smart coffeemaker, a smart alarm clock, a smart smoke alarm, a smart carbon monoxide detector, a smart security sensor, a smart doorbell camera, a smart indoor or outdoor camera, a smart door lock, a smart thermostat, a smart plug, a smart television, a smart speaker, a smart remote controller, or a voice controller. Still further, each of IoT devices 306, 308, 310 and 312 may comprise a wearable device such as a watch, a fitness tracker, a health monitor, a smart pacemaker, or an extended reality headset. Yet further, each of IoT devices 306, 308, 310 and 312 may comprise a drone or other device capable of being piloted or otherwise navigated in or around premises 302, or a robot or other device capable of self-locomotion through premises 302. However, these are only examples and are not intended to be limiting.

IoT devices 306, 308, 310 and 312 may be communicatively connected to a local area network (LAN) 340 via a suitable wired and/or wireless connection. LAN 340 may be implemented using a hub-and-spoke or star topology. For example, in accordance with such an implementation, each of IoT devices 306, 308, 310 and 312 may be connected to a router via a corresponding Ethernet cable, wireless access point (AP), or IoT device hub. The router may include a modem that enables the router to act as an interface between entities connected to LAN 340 and an external wide area network (WAN), such as the Internet. Alternatively, LAN 340 may be implemented using a full or partial mesh network topology. In accordance with a full mesh network topology, each IoT device in the set of IoT devices in premises 302 may be directly connected to each of the other IoT devices in the premises such that it can communicate therewith without a router. In accordance with a partial mesh network technology, only some of the IoT devices in premises 302 may be directly connected to other ones of the IoT devices, and indirect communication between unconnected IoT device pairs may be carried out through one or more intervening devices. A mesh network implementation of LAN 340 may likewise be connected to an external WAN, such as the Internet, via a router. However, these are examples only, and other techniques for implementing LAN 340 may be used.

As further shown in FIG. 3, IoT device 306 may comprise one or more processors 328, one or more sensors 330, a sensor data collector 332, one or more actuators 334, and one or more communication interfaces 336. Processor(s) 328 may comprise one or more central processing units (CPUs), microcontrollers, microprocessors, signal processors, application specific integrated circuits (ASICs), and/or other physical hardware processor circuits for performing tasks such as program execution, signal coding, data processing, input/output processing, power control, and/or other functions.

Sensor(s) 330 may comprise one or more devices or systems for detecting and responding to (e.g., measuring, recording) objects and events in the physical environment of IoT device 306. By way of example only and without limitation, sensor(s) 330 may include one or more of a camera or other optical sensor, a microphone or other audio sensor, a radar system, a LiDAR system, a Wi-Fi sensing system, a Global Positioning System (GPS) sensor, a temperature sensor, a pressure sensor, a proximity sensor, an accelerometer, a gyroscope, a magnetometer, an infrared sensor, a gas sensor, and/or a smoke sensor. An IoT device that includes a sensor in the form of a camera may also be referred to herein as an IoT camera.

Sensor data collector 332 may be configured to collect sensor data from sensor(s) 330 of IoT device 306 and provide such sensor data to item search service 350 for use thereby in executing a search for an item in or around premises 302, as well as to provide other features. For example, sensor data collector 332 may continuously, periodically or intermittently collect images captured by a camera of IoT device 306 and provide such images to item search service 350 to enable item search service 350 to execute a search for an item. Sensor data collector 332 may provide the sensor data to item search service 350 by storing the sensor data in an IoT device sensor data store 364 that is accessible to both IoT device 306 and item search service 350. Data store 364 is intended to represent any physical storage device or system suitable for storing data.

Actuator(s) 334 may comprise one or more devices or systems that are operable to effect a change in the physical environment of IoT device 306. By way of example only and without limitation, actuator(s) 334 may comprise a component that connects a device to a power source, disconnects a device from a power source, switches a light on or off, adjusts a brightness or a color of a light, turns an audible alarm on or off, adjusts the volume of an audible alarm, initiates a call to a security service, turns a heating or cooling system on or off, adjusts a target temperature associated with a heating or cooling system, locks or unlocks a door, rings a doorbell, initiates capture of video or audio, changes a channel or configuration of a television, adjusts the volume of an audio output device, or the like.

Communication interface(s) 336 may comprise components suitable for enabling IoT device 306 to wirelessly communicate with other devices via a corresponding wireless protocol. Communication interface(s) 336 may include, for example and without limitation, one or more of: a Wi-Fi interface that enables IoT device 306 to wirelessly communicate with an access point or other remote Wi-Fi-capable device according to one or more of the wireless network protocols based on the IEEE (Institute of Electrical and Electronics Engineers) 802.11 family of standards, a cellular interface that enables IoT device 306 to wirelessly communicate with remote devices via one or more cellular networks, a Bluetooth interface that enables IoT device 306 to engage in short-range wireless communication with other Bluetooth-enabled devices, or a Zigbee interface that enables IoT device 306 to wirelessly communicate with other Zigbee-enabled devices.

Communication interface(s) 336 may additionally or alternatively comprise components suitable for enabling IoT device 306 to communicate over a wired connection with other devices via a corresponding wired protocol, such as a Universal Serial Bus (USB) connection and protocol or Ethernet connection and protocol.

As further shown in FIG. 3, IoT device 306 may include an item search user interface (UI) 326. Item search UI 326 may comprise a UI that enables a user to interact with item search service 350 to execute a search for an item within premises 302 as well as to receive the results of such search. Item search UI 326 may also comprise a UI that enables a user to invoke other features of item search service 350, such as online training, content filtering, authentication, and item-based automation and item-based monitoring and alerts. These features will be described in more detail herein.

Item search UI 326 may comprise one or more input devices (e.g., one or more of a remote control, a set of buttons, a keypad, a keyboard, a mouse, a touch pad, a touch screen, a microphone, or the like), one or more output devices (e.g., one or more of a display screen, a speaker, or the like), and a software component executed by processor(s) 328 that is configured to accept user input provided using the input device(s) and present output to the user using the output device(s). Such software component of item search UI 326 may further be configured to communicate with item search service 350 using a suitable application programming interface (API) to invoke features of item search service 350, pass user inputs thereto, receive outputs therefrom, and the like. Depending upon the implementation, item search UI 326 may comprise a graphical UI (GUI), a menu-driven UI, a touch UI, a voice UI, a form-based UI, a natural language UI, or the like.

Each of IoT devices 308, 310 and 312 may include similar components to those shown with respect to IoT device 306. Thus, for example, each of IoT device 308, 310 and 312 may include one or more processors, one or more sensors, a sensor data collector, one or more actuators, one or more communication interfaces, and an item search UI.

User device 304 is intended to represent a personal computing device or media device associated with a user. For example, in an embodiment in which multimedia environment is present in premises 302, user device 304 may comprise media device 106, and a user interface of user device 304 may be presented to a user via display device 108. User device 304 may also comprise a smart phone, a laptop computer, a notebook computer, a tablet computer, a netbook, a desktop computer, a video game console, or a wearable device (e.g., a smart watch or extended reality headset). User device 304 may include one or more processors 316, one or more sensor(s) 318, a sensor data collector 320, one or more actuators 322, one or more communication interfaces 324, and an item search UI 314.

Processor(s) 316 may comprise one or more CPUs, microcontrollers, microprocessors, signal processors, ASICs, and/or other physical hardware processor circuits for performing tasks such as program execution, signal coding, data processing, input/output processing, power control, and/or other functions.

Sensor(s) 318 may comprise one or more devices or systems for detecting and responding to (e.g., measuring, recording) objects and events in the physical environment of user device 304. Sensor(s) 318 may include, for example, one or more of the sensor types previously described in reference to sensor(s) 330 of IoT device 306.

Sensor data collector 318 may be configured to collect sensor data from sensor(s) 318 of user device 304 and provide such sensor data to item search service 350 for use thereby in executing a search for an item in or around premises 302, as well as to provide other features to be described herein. For example, sensor data collector 318 may continuously, periodically or intermittently collect images captured by a camera of user device 304 and provide such images to item search service 350 to enable item search service 350 to execute a search for an item. Sensor data collector 320 may provide the sensor data to item search service 350 by storing the sensor data in IoT device sensor data store 364 that is accessible to both user device 304 and item search service 350.

Actuator(s) 322 may comprise one or more devices or systems that are operable to effect a change in the physical environment of user device 304. Actuator(s) 322 may comprise, for example, one or more of the actuator types previously described in reference to actuator(s) 334 of IoT device 306.

Communication interface(s) 324 may comprise components suitable for enabling user device 304 to communicate with other devices via a wired or wireless communication medium using a corresponding wired or wireless communication protocol. Communication interface(s) 324 may comprise, for example, one or more of the communication interface types previously described in reference to communication interface(s) 336 of IoT device 306.

Item search UI 314 may comprise a UI that enables a user to interact with item search service 350 to execute a search for an item within premises 302 as well as to receive the results of such search. Item search UI 314 may also comprise a UI that enables a user to invoke other features of item search service 350, such as online training, content filtering, authentication, and item-based automation and item-based monitoring and alerts. These features will be described in more detail herein.

Item search UI 314 may comprise one or more input devices (e.g., one or more of a remote control, a set of buttons, a keypad, a keyboard, a mouse, a touch pad, a touch screen, a microphone, or the like), one or more output devices (e.g., one or more of a display screen, a speaker, or the like), and a software component executed by processor(s) 316 that is configured to accept user input provided using the input device(s) and present output to the user using the output device(s). Such software component of item search UI 314 may further be configured to communicate with item search service 350 using a suitable API to invoke features of item search service 350, pass user inputs thereto, receive outputs therefrom, and the like. Depending upon the implementation, item search UI 314 may comprise a GUI, a menu-driven UI, a touch UI, a voice UI, a form-based UI, a natural language UI, or the like.

Although only a single user device 304 is shown in FIG. 3, it is to be understood that multiple user devices may be present in premises 302, and each such user device may be configured in a like manner to user device 304.

Additionally, although only a single premises 302, with associated user device 304 and set of IoT devices 306, 308, 310 and 312, is shown in FIG. 3 for the sake of simplicity, it is to be understood that system 300 may include any number of premises (including hundreds, thousands, tens of thousands, hundreds of thousands, millions, or hundreds of millions of premises), each with its own user device(s) and IoT devices, and that item search service 350 may be used to provide IoT camera-based item search services to each such premises utilizing the IoT devices respectively deployed therein.

### Item Search Service 350

As further shown in FIG. 3, system 300 includes an item search service 350. As will be discussed below, item search service 350 may utilize images captured by various IoT cameras present in premises 302 to assist a user in locating an item of interest in premises 302, as well as provide other features.

Item search service 350 (and each of its various components) may be implemented as processing logic that can comprise hardware (e.g., circuitry, dedicated logic, programmable logic, microcode, etc.), software (e.g., instructions executing on a processing device), or a combination thereof. Item search service 350 may be implemented by one or more devices (e.g., one or more servers) that are remote from premises 302 but communicatively connected thereto (e.g., communicatively connected to LAN 340) via one or more networks. Alternatively, item search service 350 may be implemented by a device within premises 302, such as by user device 304, or one of IoT devices 306, 308, 310 and 312. Still further, item search service 350 may be implemented in a distributed manner by two or more remotely located and/or local devices.

In certain implementations, item search service 350 is installed and executed exclusively on one or more devices within premises 302 (e.g., the edge) with no dependencies whatsoever on any computing devices external to premises 302 (e.g., the cloud). Such an implementation may serve to protect the privacy and data security of the user by avoiding the transmission of personal user data outside of premises 302, enable the processing demands of item search service 350 to be distributed across multiple end user devices, and increase resiliency as, without a cloud dependency, item search service 350 may still be capable of operating even when an Internet connection is lost.

As further shown in FIG. 3, item search service 350 includes a number of components including an item search module 352, an online training module 354, a content filtering module 356, an authentication module 358 and an item-based automation/alerts module 360. Each of these components of item search service 350 will now be described.

### Item Search Module 352

Item search module 352 may execute a search for an item of interest that is located in or around premises 302. Item search module 352 may execute such an item search based on user input submitted to item search service 350 via a UI, such as item search UI 314 or item search UI 326. The user input may comprise, for example, speech input and/or text input regarding the item of interest. In some implementations, the speech input or text input may comprise natural language input. By way of example, the natural language input might be "where is my smartphone?" or "help me find my keys".

To execute the item search, item search module 352 may access a plurality of images of premises 302 captured by one or more IoT devices present in premises 302, such as one or more of IoT device 306, IoT device 308, IoT device 310, or IoT device 312. The plurality of images may also include images captured by one or more user devices, such as user device 304. As was previously noted, such images may be captured by these devices and then stored in IoT device sensor data store 364, where they are accessible to item search service 350.

To execute the item search, item search module 352 may further execute a machine learning model 362 that is incorporated within item search module 352 or is otherwise accessible thereto. Machine learning model 362 may operate to identify one or more images in the plurality of images of premises 302 that include the item of interest based at least on the user input. For example, machine learning model 362 may compare an encoded representation of the user input to an encoded representation of each image in the plurality of images to identify which, if any, of the images may include the item referred to by the user input, although this is only an example. To utilize machine learning model 362, item search module 352 may first process the speech or text input provided by the user to place it in a form suitable for processing by machine learning model 362. Likewise, item search module 352 may also process each image in the plurality of images of premises 302 to place each image in a form suitable for processing by machine learning model 362.

Machine learning model 362 may comprise, for example, a multi-modal machine learning model trained on both image and text inputs. For example, machine learning model 362 may comprise a multi-modal machine learning model trained on a relatively large dataset of image-text pairs (e.g., hundreds of millions of image-text pairs), wherein the text associated with a given image comprises natural language text. For example, an image-text pair may comprise an image from a web page and a natural language caption that accompanies the image on the web page. One non-limiting example of such a multi-modal machine learning model is the Contrastive Language-Image Pre-training (CLIP) neural network developed by OpenAI^{®}. Models such as CLIP are designed to be used in a zero-shot manner, which means that the model may be used to recognize item classes that were not observed during training, by associating observed and non-observed classes through some form of auxiliary information, which encodes observable distinguishing properties of items. In the present context, this means that machine learning model 362 may advantageously provide useful results to a natural language query submitted by a user (e.g., "where did I leave my keys?") even though machine learning model 362 may not have observed the particular item that the user is looking for during training.

Furthermore, utilizing a machine learning model 362 that has been trained on both vision and natural language modalities can greatly enhance the user experience, as the user may request an item search using natural language prompts and need not adhere to a specific set of labels to execute a search. This can make invoking an item search a simple and straightforward experience for the user.

Alternatively, machine learning model 362 may comprise a computer vision detection model that is trained to recognize a predefined set of item classes. For example, such a computer vision detection model may be trained on a set of images, wherein each image is labeled (e.g., by a human) with one of the classes in the predefined set of item classes. In accordance with such an implementation, the predefined set of item classes may include common items that users may want to search for in a premises.

In certain implementations, item search module 352 may select machine learning model 362 from among a plurality of different machine learning models, wherein each machine learning model of the plurality of different machine learning models is trained or fine-tuned for one of a particular premises type or a particular user demographic. Such a feature may enable a machine learning model to be selected that will provide the best item tracking performance for a particular premises and/or a particular user.

For example, item search module 352 may select machine learning model 362 from among a machine learning model trained or fine-tuned to recognize items commonly found in a home and a machine learning model trained or fine-tuned to recognize items commonly found in an office. As another example, item search module 352 may select machine learning model 362 from among a machine learning model trained or fine-tuned to recognize items commonly found in a highrise apartment and a machine learning model trained or fine-tuned to recognize items commonly found in a suburban home. As still another another example, item search module 352 may select machine learning model 362 from among a model trained or fine-tuned to recognize items commonly used by a first age group and a model trained or fine-tuned to recognize items commonly used by a second age group. As still another example, item search module 352 may select machine learning model 362 from among a model trained or fine-tuned to recognize items commonly used in a first geographic location and a model trained or fine-tuned to recognize items commonly used in a second geographic location.

Item search module 352 may select machine learning model 362 from among a plurality of different machine learning models based on information obtained by item search service 350 about premises 302 (e.g., a premises type) and/or about a user associated with premises 302 (e.g., demographic information about the user). Such information may be provided, for example, by the user associated with premises 302 as part of registering for or configuring item search service 350. In another implementation, item search service 350 may present the user associated with premises 302 with a list of different models and enable the user to select a model from the list. Still other methods may be used by item search module 352 to select machine learning model 362 from among a plurality of different machine learning models.

After item search module 352 has utilized machine learning model 362 to identify one or more images of premises 302 that include the item of interest, item search module 352 may further operate to generate one or more item search results based on the one or more images and then provide the item search result(s) to the user via a UI, such as item search UI 314 or item search UI 326.

For example, item search module 352 may analyze the one or more images that include the item of interest to generate a speech or text description of the item of interest based on the images. In further accordance with this example, item search module 352 may analyze the one or more images, and based on such analysis, generate a natural language text or speech response "your keys are in the living room" or "your keys are on the left side of the couch in the living room." As another example, item search module 350 may utilize the one or more images that include the item of interest to generate an image that shows the location of the item of interest. For example, item search module 350 may take an image that shows a user's keys on the left side of a couch in the living room and highlight the keys within the image before presenting the image to the user. As another example, item search module 350 may extract a portion of the image that shows the keys on the left side of the couch and present a zoomed-in representation of that portion of the image to the user.

Still other methods for generating and presenting item search result(s) may be utilized. For example, in certain implementations, item search module 352 may be configured to activate various automated devices within premises 302 to indicate a location of the item of interest to the user. For example, item search module 352 may turn on one or more smart lights proximate to the item of interest, cause an IoT device proximate to the item of interest to emit an audible sound, or the like. If the item of interest itself is a device that is controllable by item search service 350, then item search module 352 may cause the device itself to emit a sound, vibrate, or generate some other stimulus to help the user more easily locate the item. If item search module 352 determines that the item of interest is currently possessed by or proximate to a particular person within premises 302, item search module 352 may send a notification to a user device (e.g., a smartphone) associated with that person to let them know that the user is currently searching for the item.

Since the plurality of images stored in IoT device sensor data store 364 may include both currently-captured images (e.g., images captured immediately before and/or during the item search) as well as older images, item search module 352 may be able to identify where an item of interest is currently located as well as where an item of interest was last seen, even if the item of interest cannot be found in any currently-captured images. For example, although item search module 352 may not be able to locate an item of interest in any currently-captured images, item search module 352 may be able to locate the item of interest in older images. Thus, for example, item search module 352 may be able to return text or speech item search results that indicate "your keys were last seen at 7:32 PM yesterday when you were putting them in your purse" or "your smartphone was last seen in your hand as you were entering the garage this morning". Likewise, item search module 352 may be able to return item search results that comprise an image of the item of interest at the last time it was visible to an IoT camera in premises 302.

In some scenarios, it is possible that, based on the output of machine learning model 362, item search module 352 may identify the same item of interest in multiple different locations in premises 302. For example, machine learning model 362 may identify the item of interest in images generated by different IoT cameras based on respective probability scores associated each image. In such a case, item search module 352 may present the user with results based only on the highest probability image. Alternatively, item search module 352 may present the user with all the results (e.g., sequentially by order of probability or at the same time) and ask the user to confirm which result is the correct one. This feedback from the user may then be used to further train and improve machine learning model 362. In some implementations, item search module 352 may leverage statistics about where an item is typically located and/or older images previously collected by one or more IoT cameras (e.g., images showing the user carrying the item to one of the candidate locations an hour before the execution of the item search) to select among a set of candidate locations for an item of interest.

In some cases, item search module 362 may not be able to identify the item of interest within any of the plurality of images accessed in IoT device sensor data store 364. In such as case, item search module 362 may generate an item search result indicating that the item cannot be found and provide such item search result to the user via a UI, such as item search UI 314 or item search UI 326. In some implementations, if item search module 362 cannot locate the item of interest, item search module 362 may prompt the user to take one or more actions that may assist item search module 352 in locating the item of interest in a subsequent search, such as: provide a different or more verbose description of the item of interest, activate additional IoT cameras within premises 302, alter a field of view of one or more IoT cameras within premises 302, or invoke an online training feature to help machine learning model 362 to better recognize the type of item that is being searched for.

Although item search service 350 is described herein in as being configured to conduct a search for an item of interest, it is noted that item search service 350 may also be configured to search for any entity or phenomenon that can be detected via image capture, such as actions (e.g., "Did I take my pill this morning?"), locations (e.g., "Where is the men's room located in this office?"), item state (e.g., "Did I leave the television on?"), or the like.

### Online Training Module 354

Online training module 354 may enable a user to train machine learning model 362 to recognize a particular item. For example, a user may provide via a UI (e.g., item search UI 314 or item search UI 326) user input that specifies an image of the particular item and a label assigned to the particular item. Online training module 354 may then utilize the image of the particular item and the associated label to train (e.g., train, retrain, or fine-tune) machine learning model 362 to recognize the particular item. Such a feature can advantageously enable a user to selectively expand the set of items that item search service 350 can find within premises 302. For example, the set of items can be expanded to include uncommon or even unique items within a premises. Such a feature can also advantageously enable a user to assign custom names to objects (e.g., a family pet may be labeled with its name, a child's blanket may be labeled with a nickname assigned to it by the child, or the like).

Different methods may be used to specify the image and the associated label depending upon the implementation. For example, the user may upload an image of the item captured using a user device (e.g., user device 104) and also submit speech or text input describing the item. As another example, the user may present the item within a field of view of an IoT camera (such that an image of the item can be captured by the IoT camera and made accessible to item search service 350) while also providing a speech or text description of the item. Thus, in accordance with this example, the user may say "these are my keys" while holding up the keys in front of an IoT camera. As yet another example, the user may provide a speech/text description of the item and online training module 354 may cause an image captured by an IoT camera within premises 302 to be presented to the user and may request that the user tag or otherwise indicate the item within the image. As a further example, the user may provide a speech/text description of the item and online training module 354 may then cause multiple images captured by one or more IoT cameras within premises 302 to be presented to the user and may request that the user identify which, if any, of the images include the item. However, these are only some examples and still other methods may be used by which the user may specify the image of the item and the associated label.

The online training feature may be utilized to distinguish between similarly named items based on item ownership or other user-item associations. For example, the online training feature may be used to train machine learning model 362 to distinguish between "Dad's smartphone" and "Mom's smartphone". A user may make this distinction explicitly, for example, by providing online training module 354 with an image of Dad's smartphone along with the label "Dad's smartphone" and an image of Mom's smartphone along with the label "Mom's smartphone". However, this distinction may also be inferred by online training module 354. For example, online training module 354 may infer that an image of a smartphone submitted with the label "smartphone" should in fact be labeled "Dad's smartphone" because Dad is submitting the image as part of the online training process or because historically the smartphone being identified has been observed most often being used by Dad (e.g., observed by one or more IoT cameras in premises 302).

Accordingly, user-specific item labels can be used to train (e.g., train, retrain or fine-tune) machine learning model 362 so that when a particular user says "where did I leave my smartphone?", machine learning model 362 can identify that particular user's smartphone (e.g. Dad's smartphone) in the IoT camera images. That is to say, item search module 352 may execute an item search based both on speech/text input from a user ("where did I leave my smartphone?") and an identity of the user submitting such input (e.g., "Dad"), so that what is really being searched for is "Dad's smartphone".

In certain implementations, online training module 354 may be configured to generate printable QR codes or other fiducial markers that a user can affix to an item of interest to render such item easer to recognize/distinguish when it appears in an image. Such fiducial markers may be attached to the item prior to image capture for the purposes of online training. In further accordance with such an example, online training module 354 may determine one or more aspects of the fiducial marker (e.g., QR code size and/or density) based on a maximum resolution or other feature associated with one or more IoT cameras within premises 302.

Conducting online training of machine learning model 362 may entail processing an image of an item specified by a user to place it in a form suitable for training machine learning model 362, processing a label of the item provided by the user to place it in a form suitable for training machine learning model 362, and then conducting training of machine learning model 362 using such transformed inputs. Once online training has been completed, online training module 354 may return a message or other indication to the UI (e.g., item search UI 314 or item search UI 326) that indicates that online training was successful.

In some scenarios, machine learning model 362 may comprise a model that is designed to support multi-modal one-shot learning, such that only one image and a label of the item need be submitted to train machine learning model 362 to subsequently identify the item in IoT camera images, or a model that is designed to support multi-modal few-shot learning, in which case multiple (e.g., two to five) images of the item may need to be submitted along with the associated label.

In certain implementations, an initial version of machine learning model 362 may be provided at the time that item search service 350 is first activated or installed, wherein such initial version is trained to recognize a default or base set of items. After such activation/installation, a user may invoke the aforementioned features of online training module 354 to retrain machine learning model 362 to recognize additional items that extend beyond the default or base set. In further accordance with such implementations, a user may be capable of disabling or opting out of the online training feature. For example, a user may elect to disable or opt out of the online training feature for reasons relating to data privacy.

In some implementations, online training module 354 may be configured to suggest items to a user that the user may wish to add to the default or base set of items through online training. Such suggestions may be made for example based on collaborative filtering techniques keyed off of a premises type of premises 302, a geolocation of premises 302, and/or demographic information associated with the user.

In certain implementations, each user associated with premises 302 may be capable of using online training module 354 to independently train a different version of machine learning model 362, resulting in the generation of multiple user-specific machine learning models. In accordance with such a scenario, when conducting an item search for a particular user, item search module 352 may utilize the machine learning model associated with the particular user for performing the item search.

### Content Filtering Module

Content filtering module 356 may enable a user of item search service 350 to specify an item that should not be searchable by item search service 350. Based on the specification of the item, content filtering module 356 may apply a content filter to item search service 350 that prevents item search service 350 from searching for the item or that prevents item search service 350 from providing an item search result about the item. Such a feature can advantageously enable a user of item search service to selectively "hide" certain items from item search service 350 that the user does not wish to be locatable (e.g., a wall safe, a handgun).

For example, a user may specify an item that should not be searchable by the item search service by interacting with one of item search UI 314 or item search UI 326. In further accordance with such an example, the user may interact with the UI to provide a speech or text description of the item that should not be searchable and/or provide or specify an image of the item that should not be searchable.

In response to receiving such input, content filtering module 356 may activate a content filter that ensures that item search module 352 cannot be used to locate the item of interest. Such content filter may act on the input side, meaning that if the content filter determines based on a user's item search query that the query is targeting an item that should not be searched, then the content filter will prevent the item search from executing at all. However, such content filter may also operate on the output side, meaning that if the content filter determines that an item search result includes an item that should not be searched for, the content filter can prevent that item search result from being returned to a user.

### Authentication Module

Authentication module 358 may implement an authentication feature that ensures that only authorized users can use item search service 350 and/or search for particular items using item search service 350. Such a feature can advantageously prevent misuse of item search service 350 by bad actors (e.g., home intruders) as well as generally prevent certain users from locating certain items within premises 302 using item search service (e.g., preventing a child in a home from accessing certain dangerous or prohibited items).

Authentication module 358 may be activated when a user attempts to initiate an item search or when a user attempts to initiate an item search for a particular item (e.g., an item on a list of sensitive or restricted items). Authentication may be carried out using any known system or technology for authenticating a user. For example, authentication may be performed based on biometric checks of the user, wherein some or all of the data collected for performing the biometric checks may be obtained by one or more of the IoT devices or user devices within premises 302. In further accordance with such an example, facial recognition may be performed based on images captured camera(s) in IoT/user devices, voice recognition may be performed based on audio captured by microphone(s) in IoT/user devices, fingerprint recognition may be performed by a user device, or the like. Still other forms of authentication may be used, such as but not limited to password-based authentication, multi-factor authentication, or the like.

If authentication is successful, then authentication module 358 may determine that the user is an authorized user of item search service 350 either generally or for the purposes of searching for particular items. In such a case, authentication module 358 may then enable the user to execute an item search using item search module 352.

In some implementations, authentication module 358 may be configured to assign different roles to different users within premises 302 (e.g., parent vs. child, resident vs. guest, or the like) and may implement a role-based access control (RBAC) scheme to determine which users can access which features of item search service service 350 and how such users may use such features. For example, a parent may be allowed to set or remove content filters for other users and also execute item searches for all items, whereas a child may not be allowed to set or remove content filters and may be forbidden to execute item searches for certain items. As another example, a resident may be able to utilize the online training feature to teach machine learning model 362 to recognize additional items but a guest may not. However, these are only a few examples, and various other roles and associated access policies may be used.

### Item-Based Automation/Alerts Module

Item-based automation/alerts module 360 may leverage the item search features of item search service 350 to enable user to set up various automation or monitoring/alert workflows for premises 302.

For example, with respect to automation, a workflow may be set up by a user in which the presence or absence of a particular item in a particular location may result in one or more actions being carried out. By way of example, a user may enact workflows such as: if my keys aren't on the kitchen counter at 7 AM in the morning, conduct an item search for the keys; if I am seen heading to the garage with this particular key, automatically open the first garage door but not the second; if I am in bed or am seen leaving the house, lock all the doors and activate the home alarm system; or if Mom enters the living room, turn on the living room lights. However, these are merely examples and are not intended to be limiting.

With respect to monitoring and alerts, a workflow may be set up by a user in which the presence or absence of a particular item in a particular location may result in a notification being sent to the user. By way of example, a user may enact workflows such as: notify me if my laptop is seen outside of my home office; notify me if the hidden wall safe becomes observable; notify me if my handgun is seen outside of my gun safe; or notify Mom or Dad if the baby is seen outside of the nursery. However, these are merely examples and are not intended to be limiting.

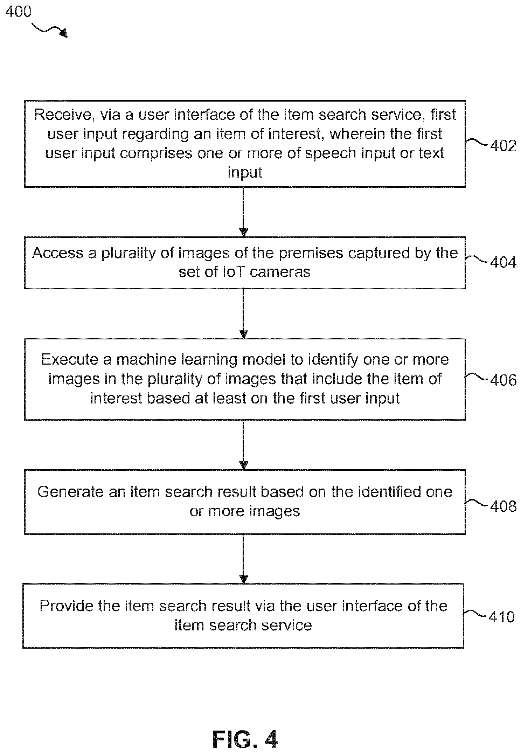

FIG. 4 illustrates a flow diagram of a method 400 for providing an item search service for a premises comprising a set of IoT cameras, according to some embodiments. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art.

Method 400 shall be described with reference to FIG. 3. However, method 400 is not limited to that example embodiment.

In 402, item search module item 352 of item search service 350 receives, via a user interface of item search service 350 (e.g., item search UI 314 or item search UI 326), first user input regarding an item of interest, wherein the first user input comprises one or more of speech input or text input.

In 404, item search module 352 accesses a plurality of images of premises 302 captured by a set of IoT cameras present in premises 302 (e.g., one or more of IoT device 306, IoT device 308, IoT device 310 or IoT device 312). For example, item search module 352 may access the plurality of images by accessing IoT device sensor data store 364 in which such images may be stored.

In 406, item search module 352 executes machine learning model 362 to identify one or more images in the plurality of images that include the item of interest based at least on the first user input. In certain implementations, the first user input comprises natural language input and machine learning model 362 comprises a multimodal machine learning model trained on a set of images and natural language text respectively associated with each image in the set of images. In further implementations, machine learning model 362 is selected from among a plurality of different machine learning models, wherein each machine learning model of the plurality of different machine learning models is trained or fine-tuned for one of a particular premises type or a particular user demographic.

In 408, item search module 352 generates an item search result based on the identified one or more images. In certain implementations, generating the item search result comprises one or more of generating a speech or text description of a location of the item of interest based on the identified one or more images, or generating an image that shows the location of the item of interest based on the identified one or more images.

In 410, item search module 352 provides the item search result to a user via the UI of item search service 350 (e.g., via item search UI 314 or item search UI 326).

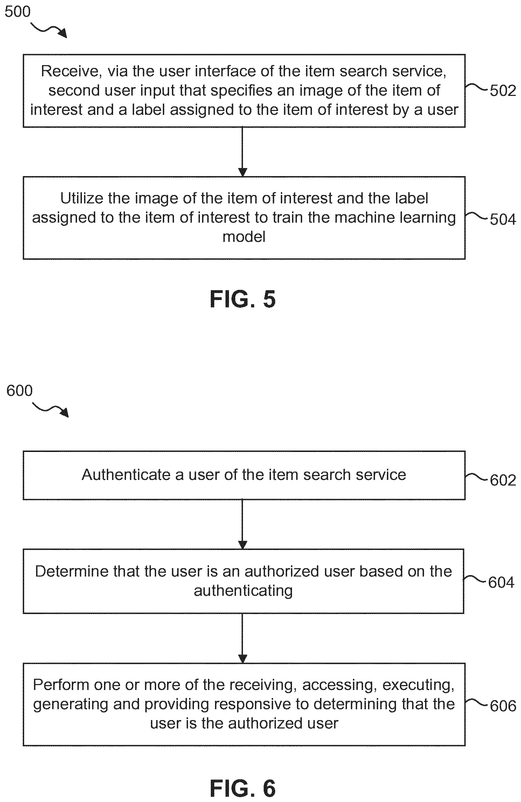

FIG. 5 illustrates a flow diagram of a method 500 for training a machine learning model used to implement an item search service for a premises, according to some embodiments. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art.

Method 500 shall be described with reference to FIG. 3. However, method 500 is not limited to that example embodiment.

In 502, online training module 354 of item search service 350 receives, via a user interface of item search service 350 (e.g., item search UI 314 or item search UI 326), second user input that specifies an image of the item of interest and a label assigned to the item of interest by the user.

In 504, online training module 354 utilizes the image of the item of interest and the label assigned to the item of interest to train (e.g., train, retrain, or fine tune) machine learning model 362.

FIG. 6 illustrates a flow diagram of a method 600 for providing a secure item search service for a premises, according to some embodiments. Method 600 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6, as will be understood by a person of ordinary skill in the art.

Method 600 shall be described with reference to FIG. 3. However, method 600 is not limited to that example embodiment.

In 602, authentication module 358 of item search service 350 authenticates a user of item search service 602.

In 604, authentication module 358 determines that the user is an authorized user based on the authenticating.

In 606, item search module 352 of item search service 350 performs one or more of the receiving 402, accessing 404, executing 406, generating 408 or providing 410 of method 400 responsive to determining that the user is the authorized user in 604.

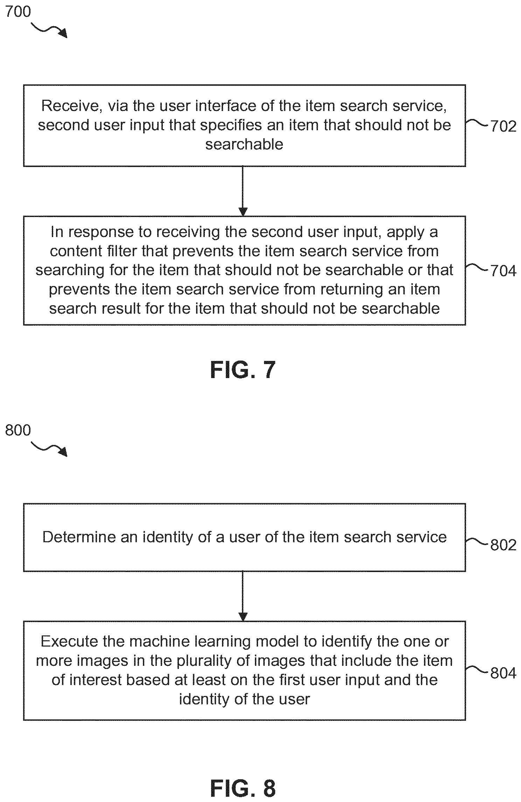

FIG. 7 illustrates a flow diagram of a method 700 for preventing an item search service for a premises from searching for a specified item, according to some embodiments. Method 700 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 7, as will be understood by a person of ordinary skill in the art.

Method 700 shall be described with reference to FIG. 3. However, method 700 is not limited to that example embodiment.

In 702, content filtering module 356 of item search service 350 receives, via a user interface of item search service 350 (e.g., item search UI 314 or item search UI 326), second user input that specifies an item that should not be searchable.

In 704, content filtering module 356 applies a content filter that prevents item search service 350 from searching for the item that should not be searchable or that prevents item search service 350 from returning an item search result for the item that should not be searchable.

FIG. 8 illustrates a flow diagram of a method 800 for providing an item search service for a premises that supports user-specific query interpretation, according to some embodiments. Method 800 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 8, as will be understood by a person of ordinary skill in the art.

Method 800 shall be described with reference to FIG. 3. However, method 800 is not limited to that example embodiment.

In 802, item search module 352 of item search service 350 determines an identity of a user of item search service 350.

In 804, item search module 352 executes machine learning model 362 to identify the one or more images in the plurality of images that include the item of interest based at least on the first user input and the identity of the user determined in 802. For example, item search module 352 may modify the first user input (e.g., "where is my smartphone") to incorporate an identifier of the user (e.g., "where is Dad's smartphone") prior to providing the first user input to machine learning model 362.

### Example Computer System

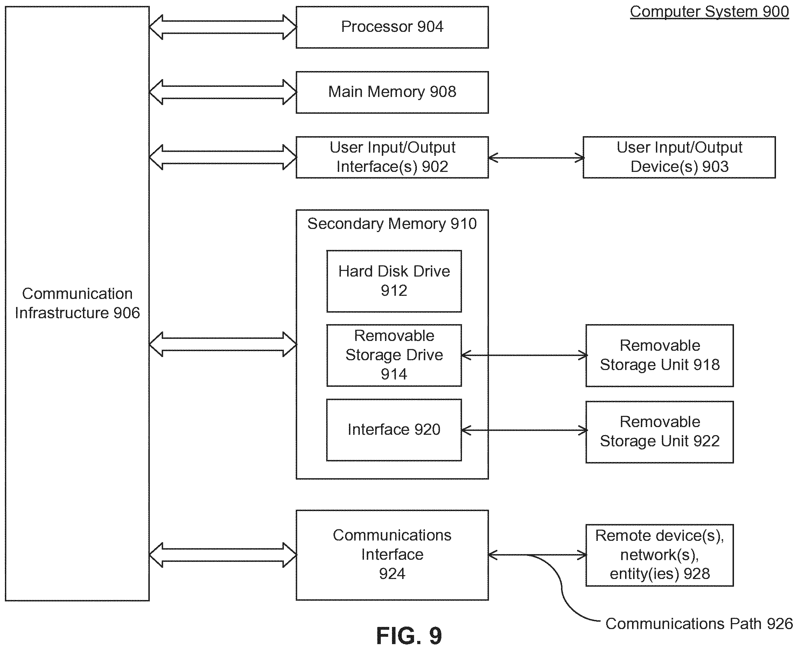

Various embodiments may be implemented, for example, using one or more well-known computer systems, such as computer system 900 shown in FIG. 9. For example, one or more of user device 304, IoT device 306, IoT device 308, IoT device 310, IoT device 312, item search service 350, item search module 352, online training module 354, content filtering module 356, authentication module 358, item-based automation/alerts module 360, machine learning model 362, or IoT device sensor data store 364 may be implemented using combinations or sub-combinations of computer system 900. Also or alternatively, one or more computer systems 900 may be used, for example, to implement any of the embodiments discussed herein, as well as combinations and sub-combinations thereof.

Computer system 900 may include one or more processors (also called central processing units, or CPUs), such as a processor 904. Processor 904 may be connected to a communication infrastructure or bus 906.

Computer system 900 may also include user input/output device(s) 903, such as monitors, keyboards, pointing devices, etc., which may communicate with communication infrastructure 906 through user input/output interface(s) 902.

One or more of processors 904 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 900 may also include a main or primary memory 908, such as random access memory (RAM). Main memory 908 may include one or more levels of cache. Main memory 908 may have stored therein control logic (i.e., computer software) and/or data.

Computer system 900 may also include one or more secondary storage devices or memory 910. Secondary memory 910 may include, for example, a hard disk drive 912 and/or a removable storage device or drive 914. Removable storage drive 914 may be a floppy disk drive, a magnetic tape drive, a compact disk drive, an optical storage device, tape backup device, and/or any other storage device/drive.

Removable storage drive 914 may interact with a removable storage unit 918. Removable storage unit 918 may include a computer usable or readable storage device having stored thereon computer software (control logic) and/or data. Removable storage unit 918 may be a floppy disk, magnetic tape, compact disk, DVD, optical storage disk, and/ any other computer data storage device. Removable storage drive 914 may read from and/or write to removable storage unit 918.

Secondary memory 910 may include other means, devices, components, instrumentalities or other approaches for allowing computer programs and/or other instructions and/or data to be accessed by computer system 900. Such means, devices, components, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 900 may further include a communication or network interface 924. Communication interface 924 may enable computer system 900 to communicate and interact with any combination of external devices, external networks, external entities, etc. (individually and collectively referenced by reference number 928). For example, communication interface 924 may allow computer system 900 to communicate with external or remote devices 928 over communications path 926, which may be wired and/or wireless (or a combination thereof), and which may include any combination of LANs, WANs, the Internet, etc. Control logic and/or data may be transmitted to and from computer system 900 via communication path 926.

Computer system 900 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 900 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 900 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 900, main memory 908, secondary memory 910, and removable storage units 918 and 922, as well as tangible articles of manufacture embodying any combination of the foregoing. Such control logic, when executed by one or more data processing devices (such as computer system 900 or processor(s) 904), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 9. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

## Claims

1. A computer-implemented method for providing an item search service for a premises comprising a set of Internet of Things (IoT) cameras, comprising:
receiving, by at least one computer processor and via a user interface of the item search service, first user input regarding an item of interest, wherein the first user input comprises one or more of speech input or text input;
accessing a plurality of images of the premises captured by the set of IoT cameras;
executing a machine learning model to identify one or more images in the plurality of images that include the item of interest based at least on the first user input;
generating an item search result based on the identified one or more images; and
providing the item search result via the user interface of the item search service.

2. The computer-implemented method of claim 1, wherein the first user input comprises natural language input and wherein the machine learning model comprises a multimodal machine learning model trained on a set of images and natural language text respectively associated with each image in the set of images.

3. The computer-implemented method of claim 1, further comprising:
receiving, via the user interface of the item search service, second user input that specifies an image of the item of interest and a label assigned to the item of interest by a user; and
utilizing the image of the item of interest and the label assigned to the item of interest to train the machine learning model.

4. The computer-implemented method of claim 1, further comprising:
performing the receiving, accessing, executing, generating and providing steps on one or more devices located within the premises; and/or
selecting the machine learning model from among a plurality of different machine learning models, wherein each machine learning model of the plurality of different machine learning models is trained or fine-tuned for one of a particular premises type or a particular user demographic.

5. The computer-implemented method of claim 1, further comprising:
authenticating a user of the item search service; and
determining that the user is an authorized user of the item search service based on the authenticating;
wherein one or more of the receiving, accessing, executing, generating and providing is performed in response to the determining that the user is the authorized user of the item search service.

6. The computer-implemented method of claim 1, further comprising:
receiving, via the user interface of the item search service, second user input that specifies an item that should not be searchable; and
in response to receiving the second user input, applying a content filter that prevents the item search service from searching for the item that should not be searchable or that prevents the item search service from returning an item search result for the item that should not be searchable, and/or
further comprising:
determining an identity of a user of the item search service;
wherein executing the machine learning model comprises executing the machine learning model to identify the one or more images in the plurality of images that include the item of interest based at least on the first user input and the identity of the user.

7. The computer-implemented method of claim 1, wherein generating the item search result based on the identified one or more images comprises one or more of:
generating a speech or text description of a location of the item of interest based on the identified one or more images; or
generating an image that shows the location of the item of interest based on the identified one or more images.

8. A system for providing an item search service for a premises comprising a set of Internet of Things (IoT) cameras, comprising:
one or more memories; and
at least one processor each coupled to at least one of the memories and configured to perform operations comprising:
receiving, via a user interface of the item search service, first user input regarding an item of interest, wherein the first user input comprises one or more of speech input or text input;
accessing a plurality of images of the premises captured by the set of IoT cameras;
executing a machine learning model to identify one or more images in the plurality of images that include the item of interest based at least on the first user input;
generating an item search result based on the identified one or more images; and
providing the item search result via the user interface of the item search service.

9. The system of claim 8, wherein the first user input comprises natural language input and where the machine learning model comprises a multimodal machine learning model trained on a set of images and natural language text respectively associated with each image in the set of images.

10. The system of claim 8, wherein the operations further comprise:
receiving, via the user interface of the item search service, second user input that specifies an image of the item of interest and a label assigned to the item of interest by a user; and
utilizing the image of the item of interest and the label assigned to the item of interest to train the machine learning model, and/or
wherein the operations further comprise:
selecting the machine learning model from among a plurality of different machine learning models, wherein each machine learning model of the plurality of different machine learning models is trained or fine-tuned for one of a particular premises type or a particular user demographic.

11. The system of claim 8, wherein the operations further comprise:
authenticating a user of the item search service; and
determining that the user is an authorized user of the item search service based on the authenticating;
wherein one or more of the receiving, accessing, executing, generating and providing is performed in response to determining that the user is the authorized user of the item search service.

12. The system of claim 8, wherein the operations further comprise:
receiving, via the user interface of the item search service, second user input that specifies an item that should not be searchable; and
in response to receiving the second user input, applying a content filter that prevents the item search service from searching for the item that should not be searchable or that prevents the item search service from returning an item search result for the item that should not be searchable, and/or
wherein the operations further comprise:
determining an identity of a user of the item search service;
wherein executing the machine learning model comprises executing the machine learning model to identify the one or more images in the plurality of images that include the item of interest based at least on the first user input and the identity of the user.

13. The system of claim 8, wherein generating the item search result based on the identified one or more images comprises one or more of:
generating a speech or text description of a location of the item of interest based on the identified one or more images; or
generating an image that shows the location of the item of interest based on the identified one or more images.

14. A non-transitory computer-readable medium having instructions stored thereon that, when executed by at least one computing device, cause the at least one computing device to perform operations for providing an item search service for a premises comprising a set of Internet of Things (IoT) cameras, the operations comprising:
receiving, via a user interface of the item search service, first user input regarding an item of interest, wherein the first user input comprises one or more of speech input or text input;
accessing a plurality of images of the premises captured by the set of IoT cameras;
executing a machine learning model to identify one or more images in the plurality of images that include the item of interest based at least on the first user input;
generating an item search result based on the identified one or more images; and
providing the item search result via the user interface of the item search service.

15. The non-transitory computer-readable medium of claim 14, wherein:
the first user input comprises natural language input and where the machine learning model comprises a multimodal machine learning model trained on a set of images and natural language text respectively associated with each image in the set of images, and/or
wherein the operations further comprise:
receiving, via the user interface of the item search service, second user input that specifies an image of the item of interest and a label assigned to the item of interest by a user; and
utilizing the image of the item of interest and the label assigned to the item of interest to train the machine learning model.
